# EUROPÄISCHE PATENTSCHRIFT

(11) **EP 3 164 461 B1**
(45) Veröffentlichungstag und Bekanntmachung des Hinweises auf die Patenterteilung: **04.09.2019**
(21) Anmeldenummer: 15774531.6
(22) Anmeldetag: 21.09.2015
(51) Int. Cl.: C09K 5/06

(54) **ENERGIESPEICHER FÜR KRAFTWERK AUF BASIS EINES PHASENWECHSELMATERIALS (PCM)**
ENERGY STORE FOR A POWER PLANT ON THE BASIS OF A PHASE CHANGE MATERIAL (PCM)
ACCUMULATEUR D'ÉNERGIE POUR CENTRALE ÉLECTRIQUE À BASE DE MATÉRIAU À CHANGEMENT DE PHASE (PCM)

(30) Priorität: 30.09.2014 DE 102014219808
(43) Veröffentlichungstag der Anmeldung: 10.05.2017
(73) Patentinhaber: Siemens Aktiengesellschaft, 80333 München (DE)
(72) Erfinder: ÜBLER, Matthias, 92289 Ursensollen (DE); BÄR, Ludwig, 91056 Erlangen (DE)
(86) Internationale Anmeldenummer: PCT/EP2015/071533
(87) Internationale Veröffentlichungsnummer: WO 2016/050540

(56) Entgegenhaltungen:
- EP-A1- 2 256 451
- WO-A1-2013/178938
- "- Heat accumulating material - comprising aq. sodium acetate soin. mixedwith at least one of e.g. sodium chloride, sodium formate and lithiumacetate", WPI WORLD PATENT INFORMATION DERWENT, Bd. 1978, Nr. 12, 1. Januar 1978 (1978-01-01), XP002150252,
- "Heat storage compsn. for solar heating - comprises sodium acetate tri:hydrate mixed with calcium formate, nitrate, acetate or halide etc. to prevent phase sepn", DERWENT, 1. Januar 1983 (1983-01-01), XP002274125,
- BAUER ET AL.,: ADVANCES IN SCIENCE AND TECHNOLOGY, Bd. 74, 1. Januar 2010 (2010-01-01), Seiten 272-277, XP008178299, in der Anmeldung erwähnt

## Beschreibung

Die Erfindung betrifft einen latenten Energiespeicher auf Basis eines Phasenwechselmaterials.

Latente Energiespeicher auf Basis eines Phasenwechsels erster Ordnung (beispielsweise der Übergang vom festen in den flüssigen Zustand und umgekehrt) sind seit langer Zeit von großem Interesse für das Kraftwerksgewerbe, da zum einen ein reversibler Phasenwechsel bei konstanter Temperatur verläuft und zum anderen die latente Enthalpie (Schmelz- oder Kristallisationsenthalpie) des zugrunde liegenden Übergangs verhältnismäßig hohe Werte annehmen kann. Derartige Materialien sind in der Lage, gewisse Prozesse und/oder Temperaturniveaux, insbesondere vorteilhaft im Kraftwerksbereich, für längere Zeit thermisch und vor allem enthalpisch zu stabilisieren. Durch die Kontaktierung eines oftmals hermetisch verkapselten Phasenwechselmaterials mit einem Arbeitsmedium, wie z.B. Wasser und/oder Dampf, kann dieses länger auf konstanter Temperatur gehalten werden, nämlich dann, wenn die Temperatur des Arbeitsmediums unter eine definierte Schwelle - die Phasenwechseltemperatur des Speichermaterials - abfällt. Ist das Phasenwechselmaterial etwa im flüssigen Zustand und wird vom in der Temperatur abfallenden Arbeitsmedium abgekühlt, erfolgt der definierte Phasenübergang in den festen Zustand, wobei Kristallisationsenthalpie frei wird und die Temperatur solange konstant bleibt, bis die vollständige Erstarrung vollzogen ist. Das Arbeitsmedium erfährt dabei, guter thermischer Kontakt vorausgesetzt, enthalpische und thermische Stabilisierung. Auf diese Weise können effektive thermische Zwischenspeicher realisiert werden.

Latentspeichermaterialien haben sich großtechnisch, insbesondere im
Kraftwerksbereich, noch nicht durchgesetzt. Zwar sind die Konzepte der latenten Energiespeicherung seit Jahrzehnten im Labormaßstab erprobt, jedoch fehlt es bislang an großtechnischen Demonstratoren, die die Wirksam- und Nützlichkeit belegen. Oftmals scheitert das Konzept daran, dass die zur Verwendung postulierten Phasenwechselmaterialien eine zu geringe Phasenwechselenthalpie aufweisen, kein geeignetes Temperaturniveau haben, unrbauchbare eutektische Schmelzpunkte zeigen, ausgeprägtes Unterkühlen in der Wärmerückgewinnungsstufe zeigen, stark korrosiv, giftig oder schlecht verfügbar und damit teuer sind.

Ein Beispiel eines erfolgreich erprobten Phasenwechselspeichers ist ein vom DLR e.V. im südspanischen Carboneras aufgebaute, graphitgefinnte Natriumnitratmodul. Das verwendete, singuläre Salz schmilzt bei 306°C mit einer Schmelz- bzw. Kristallisationsenthalpie von ca. 177-178 kJ/kg.

Eine Auswahl an für den Mitteltemperaturbereich tauglichen Latentspeichermaterialien findet sich etwa bei Bauer et al., Advances in Science and Technology Vol. 74 (2010), 272-277. Dabei werden Reinsubstanzen und Mischungen der Stoffe LiOH, LiCl, LiNO3,NaOH, NaNO3, NaNO2, KNO3, KCl, Ca(NO3)2 und ZnCl2 vorgeschlagen. Diese Stoffe und/oder Mischungen sind oftmals teuer, stark korrosiv, giftig, weisen geringe Enthalpien auf oder bedürfen absoluter Abwesenheit von (Kristall)wasser zur Vermeidung chemischer Degradation.

Aus der EP 2256451 A1 ist eine Wärmespeichervorrichtung bekannt, welche in einer Speicherzone ein Latentwärmespeicher-element mit einer Hülle aufweist. Die eingesetzten Phasenwechselmaterial-Speichermedien haben Schmelztemperaturen im Bereich von ca. 50 bis 100 °C. Dieser Temperaturbereich ist für die Anwendung in der Kraftwerksbranche unbrauchbar.

Aus der WO 2013/178938A1 ist eine Vorrichtung zur Wandlung thermischer Energie in elektrische Energie bekannt, bei der aus einem unter Wärmetransferfluid Energie über ein Phasenwechselmaterial für Wohnhäuser nutzbar gemacht wird.

Aus der Veröffentlichung "Heat accumulating material - comprising aqueous sodium acetate soin. Mixed with at least one of sodium chloride sodium formate und lithiumacetate", WPI World Patent Information Derwent Bd. 1978, Nr. 12. XP002150252 ist ein Latentwärmespeichermaterial bekannt, dass chloridhaltig ist und damit für die Anwendung in der Kraftwerkssparte zu korrosiv.

Schließlich ist aus der Veröffentlichung "Heat storage composition for solar heating comprises sodium acetate trihydrated mixed with caclium formate, nitrate, acetate or halide etc. to prevent phase sepn", Derwent XP002274125 ist weiterhin ein Wärmespeichermedium bekannt, das bei Temperaturen unter 100 °C arbeitet.

Einen weitergehenden Überblick über potentielle Latentspeichermaterialien liefern Tanaka et al. in "Preliminary Examination of Latent Heat-Thermal Energy Storage Materials, III. Screening of Eutectic Mixtures over a Range from 200°C to 1500°C", Bul. Electrotech. Lab., Vol. 51(7), 19-33 (1987). Mit einer minimal geforderten Schmelzenthalpie von 300 kJ/kg oder größer, postulieren die Autoren für den Temperaturbereich von 210-360°C folgende, eutektisch schmelzenden Verbindungen:
LiOH-NaOH, 210°C, 344 kJ/kg
NH4F, 238°C, 340 kJ/kg
LiCl-LiNO3, 244°C, 358 kJ/kg
LiNO3, 250°C, 370 kJ/kg
LiCl-LiOH, 262°C, 437 kJ/kg
KCl-LiCl-LiOH, 280°C, 364 kJ/kg
K2CO3-KOH-LiOH, 309°C, 362 kJ/kg
KOH-LiOH, 314°C, 341 kJ/kg
NaOH 323°C, 345 kJ/kg
BeF2-NaF, 360°C, 327 kJ/kg.

Diesen Mischungen ist allesamt gemein, dass sie entweder stark korrosiv (hydroxid-, chlorid-, und/oder fluoridhaltig), toxisch (fluorid- und berylliumhaltig), brandfördernd (nitrathaltig) und/oder sehr teuer (lithiumhaltig) sind, obgleich die angegebenen Schmelzenthalpien freilich sehr hohe Werte darstellen und für eine Verwendung als Latentspeichermedien prädestiniert wären.

Für eine großtechnische Umsetzung sind derartige Materialien jedoch aus ökonomischer Sicht vermutlich nicht tauglich, sodass eher ein Material mit geringerer Schmelzenthalpie bei sonstig vorteilhaften Eigenschaftskennwerten einen höheren Benefit im Kraftwerksbetrieb bedeutet.

Aufgabe der vorliegenden Erfindung ist deshalb einen Latentenergiespeicher mit einem Speichermedium für den Mitteltemperaturbereich von 150°C bis 500°C, insbesondere von 200°C bis 350°C für - beispielsweise - Kraftwerksanwendungen, zu schaffen, wobei angestrebt wird, dass das Speichermedium möglichst wenig korrosiv ist, billig und aus nachhaltigen Quellen verfügbar. Weiterhin wird angestrebt, dass das Speichermedium möglichst wenig giftig ist, bei gleichzeitig hoher Energiespeicherfähigkeit mit geringer bis keiner Unterkühlungstendenz beim Erstarren.

Diese Aufgabe wird durch den Gegenstand der vorliegenden Erfindung wie er in den Ansprüchen und der Beschreibung wiedergegeben wird, gelöst.

Dementsprechend ist Gegenstand der Erfindung ein Latentenergiespeicher auf Basis einer Änderung des Aggregatzustandes eines Speichermediums, wobei Energie im Speichermedium als Schmelzenthalpie oder als Kristallisationsenthalpie speicherbar ist und der Latentwärmespeicher bei Temperaturen zwischen 150 und 500 °C betrieben wird, wobei das Speichermedium ein Acetat eines Metalls und/oder Nichtmetalls mit einem Schmelzpunkt im Bereich zwischen 150 und 500 °C umfasst.

Die Klasse der Acetate, d.h. beispielsweise die Alkali- und/oder Erdalkalisalze der Essigsäure, einer C1-Carbonsäure, sind in der Regel nicht-toxisch, biodegradierbar, nicht korrosiv und gut verfügbar. Essigsäure selbst kann durch Fermentation von biologischem Material zu Ethanol mit anschließender Veratmung durch Bakterien gewonnen werden und stallt damit einen gleichsam nachwachsenden Rohstoff dar. Das ist eine nachhaltige Quelle des Acetats.

Großtechnisch kann Essigsäure u.a. durch den Monsantoprozess, d.h. die Umsetzung von Methanol mit Kohlenmonoxid in hoher Reinheit gewonnen werden. Essigsäure stellt eine Großchemikalie dar und wird im Megatonnenmaßstab jährlich produziert. Natriumacetat, ein Vertreter eines Alkalisalzes der Essigsäure, wird etwa durch Neutralisation von Natriumcarbonat bzw. Natriumhydrogencarbonat mit Essigsäure dargestellt und ist eine billige und ungiftige Großchemikalie.

Natriumacetat bindet gemäß einer Modifikation drei Moleküle Kristallwasser (CH3COONa▪3H2O, Natriumacetat-Trihydrat). Die Verbindung schmilzt inkongruent bei 58°C und löst sich vollständig im eigenen Kristallwasser bei 78°C. Längeres Erhitzen bei 80-100°C resultiert in einer übersättigten Lösung, die wiederum bis auf Raumtemperatur abgekühlt werden kann, ohne dass Kristallisation eintritt. Durch einen Kristallisationskeim und/oder einer mechanischen Beanspruchung (Knickplättchen, Schalleintrag, Schlag), erfolgt sodann spontane Erstarrung aus der Lösung, wobei die beachtliche Enthalpie von bis zu 278 kJ/kg im Temperaturbereich um ca. 60°C wieder freigesetzt wird. Dieses Phänomen wird in den sog. "Handwärmern" bzw. aktivierbaren Wärmekissen angewandt. Natriumacetat-Trihydrat ist eine billige und gutverfügbare Großchemikalie.

Für den Temperaturbereich von 200-350°C ist diese Verbindung aufgrund der Kristallisationstemperatur und der ausgeprägten Unterkühlbarkeit freilich nicht verwendbar.

Überraschenderweise hat sich jedoch gezeigt, dass das Material problemlos entwässert werden kann und als singuläre Reinsubstanz das Potential zum Speichermedium eines Latentenergiespeichers besitzt.

Wasserfreies Natriumacetat, also Natriumacetat ohne Kristallwasser, schmilzt bei 329°C und zeigt im Gegensatz zum Trihydrat praktisch keine Unterkühlungstendenz. Ebenso verhält es sich mit Kaliumacetat, welches bei 303°C schmilzt. Auch das eutektische Gemisch aus Natrium- und Kaliumacetat zeigt für den gewünschten Temperaturbereich einen günstigen Schmelzpunkt von 232°C. Die thermische Belastbarkeit der Reinsubstanzen sowie Kationenmischungen insbesondere der ersten Hauptgruppe des Periodensystems mit gemeinsamem Acetatanion wurde im relevanten Temperaturbereich als tauglich bzw. stabil nachgewiesen. Nach Kenntnis des Erfinders wurden die Schmelzenthalpien wasserfreien Natriumacetats sowie des entsprechenden Kaliumacetats bisher noch nicht hinreichend bestimmt und zeigen überraschenderweise recht hohe Werte von ca. 210 kJ/kg für anhydridisches Natriumacetat sowie ca. 165 kJ/kg für Kaliumacetat.

Wasserfreies Natriumacetat ist eine ungiftige, nicht korrosive und günstige Chemikalie.

Diese Chemikalie wird auch kristallwasserfrei seit langem als verträgliche Enteiser-Substanz insbesondere auf Flughäfen zur Tragflächenenteisung verwendet. Die Stoffklasse ist als Lebensmittelzusatz (in Deutschland unter E262) weltweit registriert und für Mensch und Tier unbedenklich. Die Entwässerung des Natriumacetat-Trihydrats erfolgt rasch im Temperaturbereich von 150°C bis ca. 200°C.

Kaliumacetat bildet keine kristallwasserhaltige Spezies aus und ist als Lebensmittelzusatz E261 in Deutschland bekannt. Während wasserfreies Natriumacetat eine Volumenexpansion von +3,90% beim Schmelzen zeigt, hat Kaliumacetat die seltene Eigenschaft, beim Schmelzen eine Volumenkontraktion von - 1,05% zu vollführen. Damit können Abmischungen aus Natriumacetat und Kaliumacetat, insbesondere in der eutektischen Formulierung, derart eingestellt werden, dass die Volumenänderung besonders klein beim Schmelzen ist. Dies ist im Sinne der Dimensionsstabilität und des möglichen Füllgrades in einem Behältnis eines Latentenergiespeichers von großem Interesse.

Bei Mischungen, in denen Natriumacetat und/oder Kaliumacetat wasserfrei vorliegt, können bis zu 50 Mol% Kaliumacetat enthalten sein, so dass nahezu keine Volumenänderungen beim Phasenübergang entstehen.

Beispielsweise wird eine binäre Mischung (fest <-> flüssig bei fixer Temperatur) aus 48 +/-2 mol% wasserfreiem Natriumacetat und 52 +/-2 mol% wasserfreiem Kaliumacetat (Schmelzpunkt 235 +/- 3°C) eingesetzt werden. Das entspricht sodann einer Zusammensetzung 43.6 +/- 2 Gew.-% Natriumacetat und 56.4 +/- 2 Gew.-% Kaliumacetat. Diese Mischung hat eine Volumenänderung beim Phasenübergang von ca. 1.16 +/- 0.1%.

Andererseits ist eine Mischung mit 23.6 mol% Natriumacetat und 76.4 mol% Kaliumacetat nach einer vorteilhaften Ausführungsform der Erfindung einsetzbar, dies entspricht ca. 20.5 Gew.-% Natriumacetat und 79.5 Gew.-% Kaliumacetat. Diese Mischung hat eine Liquidustemperatur von 273°C (vollständige Schmelze mit einem Schmelzbeginn ab 235°C).

Für die Oberflächenstabilität eines metallischen Behältnisses, welches wasserfreie Acetate als Speichermedien beherbergt, ist überlagertes Schutzgas bzw. ein Abfüllen des Speichermediums unter Sauerstoffausschluss besonders förderlich. Dies ist für flüssige Acetate angeraten, da bei hohen Temperaturen Acetate teilweise mit Sauerstoff unter radikalischen Umlagerungen reagieren können und es dabei zu einer dunklen Verfärbung aufgrund von Karbonisierungen kommen kann. Es hat sich gezeigt, dass eine Handhabung des wasserfreien Materials unter Schutzgas, z.B. einem Strom aus Stickstoff oder Argon, während des Einfüllens, Schmelzens, Erstarrens und sogar tagelangem Flüssighaltens bei 350°C die Stabilität des Materials gewährleistet und es zu keiner Verfärbung kommt. Es ist auch denkbar, Sauerstofffänger in das Behältnis einzuschleusen, die den Restsauerstoff chemisch abbinden.

Die Wiederaufnahme von Wasser aus der Atmosphäre bei Raumtemperatur und offener Exposition zur Umgebung ist nur geringfügig bzw. vernachlässigbar bzw. im angeschlossenen Behältnis nicht von Relevanz.

Die Erfindung betrifft einen latenten Energiespeicher auf Basis eines Phasenwechselmaterials. Insbesondere betrifft sie einen Latentenergiespeicher auf Basis einer Änderung des Aggregatzustandes eines Speichermediums, wobei Energie im Speichermedium als Schmelzenthalpie oder als Kristallisationsenthalpie speicherbar ist und der Latentwärmespeicher bei Temperaturen zwischen 150 und 500 °C betrieben wird, wobei das Speichermedium ein Acetat eines Metalls und/oder Nichtmetalls mit einem Schmelzpunkt im Bereich zwischen 150 und 500 °C umfasst.

## Patentansprüche

1. Latentenergiespeicher auf Basis einer Änderung des Aggregatzustandes eines Speichermediums, wobei Energie im Speichermedium als Schmelzenthalpie oder als Kristallisationsenthalpie speicherbar ist und der Latentwärmespeicher bei Temperaturen zwischen 150 und 500 °C betrieben wird, wobei das Speichermedium ein Acetat eines Metalls und/oder Nichtmetalls mit einem Schmelzpunkt im Bereich zwischen 150 und 500 °C umfasst.

2. Latentenergiespeicher nach Anspruch 1, wobei das Speichermedium ein Acetat eines Alkali- und/oder Erdalkalimetalls umfasst.

3. Latentenergiespeicher nach einem der vorstehenden Ansprüche, wobei das Speichermedium eine Salzmischung mit mehreren Acetaten umfasst.

4. Latentenergiespeicher nach einem der vorstehenden Ansprüche, wobei das Speichermedium einen Sauerstofffänger umfasst.

5. Latentenergiespeicher nach einem der vorstehenden Ansprüche, wobei das Speichermedium beim Phasenwechsel eine Volumenänderung unter 10%, insbesondere kleiner 5% und ganz bevorzugt kleiner 2,5%, zeigt.

6. Latentenergiespeicher nach einem der vorstehenden Ansprüche, wobei das Speichermedium Natrium- und Kaliumacetat in ungefähr gleicher Menge (Molprozent) umfasst.

7. Latentenergiespeicher nach einem der vorstehenden Ansprüche, wobei das Speichermedium Natrium- und/oder Kaliumacetat in wasserfreier Form enthält.

## Claims

1. Latent energy store based on a change in the state of matter of a storage medium, wherein energy is able to be stored as enthalpy of fusion or as enthalpy of crystallization in the storage medium and the latent heat store is operated at temperatures in the range from 150 to 500°C and the storage medium comprises an acetate of a metal and/or nonmetal having a melting point in the range from 150 to 500°C.

2. Latent energy store according to Claim 1, wherein the storage medium comprises an acetate of an alkali metal and/or alkaline earth metal.

3. Latent energy store according to either of the preceding claims, wherein the storage medium comprises a salt mixture comprising a plurality of acetates.

4. Latent energy store according to any of the preceding claims, wherein the storage medium comprises an oxygen scavenger.

5. Latent energy store according to any of the preceding claims, wherein the storage medium displays a volume change of less than 10%, in particular less than 5% and very preferably less than 2.5%, during the phase change.

6. Latent energy store according to any of the preceding claims, wherein the storage medium comprises sodium acetate and potassium acetate in approximately equal amounts (mole percent).

7. Latent energy store according to any of the preceding claims, wherein the storage medium contains sodium acetate and/or potassium acetate in anhydrous form.

## Revendications

1. Accumulateur d'énergie latente à base d'une modification de l'état physique d'un milieu de stockage ; dans lequel l'énergie peut être stockée dans le milieu de stockage sous la forme d'une enthalpie de fusion ou sous la forme d'une enthalpie de cristallisation et le dispositif de stockage de chaleur latente est exploité à des températures entre 150 et 500 °C ; dans lequel le milieu de stockage comprend un acétate d'un métal et/ou d'un non métal dont le point de fusion se situe dans la plage entre 150 et 500 °C.

2. Accumulateur d'énergie latente selon la revendication 1, dans lequel le milieu de stockage comprend un acétate d'un métal alcalin et/ou d'un métal alcalinoterreux.

3. Accumulateur d'énergie latente selon l'une quelconque des revendications précédentes, dans lequel le milieu de stockage comprend un mélange de sels comprenant plusieurs acétates.

4. Accumulateur d'énergie latente selon l'une quelconque des revendications précédentes, dans lequel le milieu de stockage comprend un fixateur de l'oxygène.

5. Accumulateur d'énergie latente selon l'une quelconque des revendications précédentes, dans lequel le milieu de stockage manifeste, lors du changement de phase, une modification du volume inférieure à 10 %, en particulier inférieure à 5 % et de manière tout à fait préférée inférieure à 2,5 %.

6. Accumulateur d'énergie latente selon l'une quelconque des revendications précédentes, dans lequel le milieu de stockage comprend de l'acétate de sodium et de potassium en une quantité approximativement égale (en moles pour cent).

7. Accumulateur d'énergie latente selon l'une quelconque des revendications précédentes, dans lequel le milieu de stockage contient de l'acétate de sodium et/ou de potassium sous une forme anhydre.
